# EUROPEAN PATENT SPECIFICATION

(11) **EP 3 430 883 B1**
(45) Date of publication and mention of the grant of the patent: **08.04.2020**
(21) Application number: 18183967.1
(22) Date of filing: 17.07.2018
(51) Int. Cl.: A01D 46/26

(54) **BEATING APPARATUS, PARTICULARLY FOR BEATING OLIVES AND THE LIKE**
SCHLAGVORRICHTUNG, INSBESONDERE ZUM SCHLAGEN VON OLIVEN UND DERGLEICHEN
BATTEUR, EN PARTICULIER POUR BATTRE LES OLIVES ET SIMILAIRES

(30) Priority: 19.07.2017 IT 201700081678
(43) Date of publication of application: 23.01.2019
(73) Proprietor: Zanon S.R.L., 35011 Campodarsego PD (IT)
(72) Inventor: ZANON, Franco, 35011 CAMPODARSEGO PD (IT)
(74) Representative: Modiano, Micaela Nadia

(56) References cited:
- EP-A1- 2 384 614
- EP-A2- 2 138 028
- EP-A2- 2 374 345

## Description

The present invention relates to a beating apparatus, particularly for beating olives and the like.

Beating is a historically known operation, aimed at causing the fruits of a plant to fall in order to harvest them.

Beating methods generally provide for an operation for shaking the branches of the plant in order to cause the separation of the fruits thereof.

This shaking is performed with the aid of tools which can be simple sticks or rakes or equipment dedicated to this task, such as modern beating machines.

These machines have, at a working end of an elongated handle, devices equipped with rods moved by a motor.

The operator inserts the moving rods among the branches of the plant so that they shake them and optionally beat them, making their fruit fall.

Currently, various types of beating apparatus are known, some of which have a disk-like head which is supported by the working end of the handle and supports perimetrically rods which rotate according to a conical trajectory.

Another currently known apparatus is provided with an elongated handle provided, at a working end, with a supporting body to which a pair of oscillating sectors provided with beating rods is articulated, comprising linkage elements which connect crank elements to the oscillating sectors in order to impart thereto, during use, an oscillating motion. The crank elements are connected to motor means in order to be actuated by them. The crank elements have an eccentric pivot and the linkage elements are both rotatably connected to said eccentric pivot. In this manner, the oscillations of the sectors are mutually offset.

The oscillating sectors comprise elongated bodies for supporting the rods, which are pivoted by means of corresponding fulcrums to arms of the fork-shaped supporting body. The linkage elements are functionally connected, by virtue of corresponding articulation pivots, to the respective elongated bodies, substantially at the first longitudinal ends thereof.

Motor means actuate the oscillation of the oscillating sectors, which, when they are inserted among the branches of a plant, shake them, furthermore allowing, by virtue of their rake-like shape, a combing operation, to the full benefit of quick and effective beating of the fruits.

Although it is currently highly appreciated, this apparatus has some aspects that can be improved.

The oscillating sectors are coplanar and aligned, generating a considerable space occupation for the fork-like support. This can cause hindrance to the viewing of the branches subjected to beating by the user.

The gears required for the motion of the oscillating sectors occupy a considerable volume and cause a significant space occupation for the fork-like support, with effects on the convenience of use of the beating machine.

The motor used is of the electric type with brushes and produces considerable noise, with negative consequences on user comfort.

EP 2 138 028 discloses a beating apparatus for beating olives and the like.

The aim of the present invention is to provide a beating apparatus that is capable of improving the background art in one or more of the aspects indicated above.

Within this aim, an object of the invention is to provide a beating apparatus with reduced space occupation of the oscillating sector supporting body, while maintaining the same extension of the oscillating sectors and/or the same breadth of the region of action of the rods in use, with respect to that of the apparatus of the known type.

Another object of the invention is to provide a beating apparatus that allows a better view on the branches subjected to beating by the operator.

A further object of the invention is to provide a beating apparatus that ensures greater comfort to the user.

Another object of the invention is to provide a beating apparatus the noise of which is reduced.

A further object of the present invention is to overcome the drawbacks of the background art in a manner that is alternative to any existing solutions.

Not least object of the invention is to provide a beating apparatus that is highly reliable, relatively easy to provide and at competitive costs.

This aim, as well as these and other objects which will become better apparent hereinafter, are achieved by a beating apparatus according to claim 1, optionally provided with one or more of the characteristics of the dependent claims.

Further characteristics and advantages of the invention will become better apparent from the description of a preferred but not exclusive embodiment of the beating apparatus according to the invention, illustrated by way of nonlimiting example in the accompanying drawings, wherein:

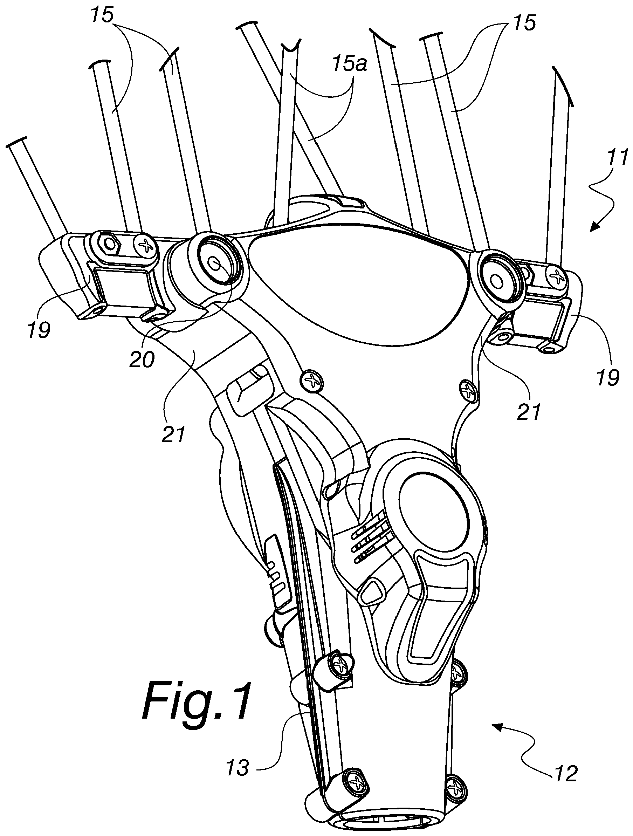

Figure 1 is a general view of a detail of a beating apparatus according to the invention;

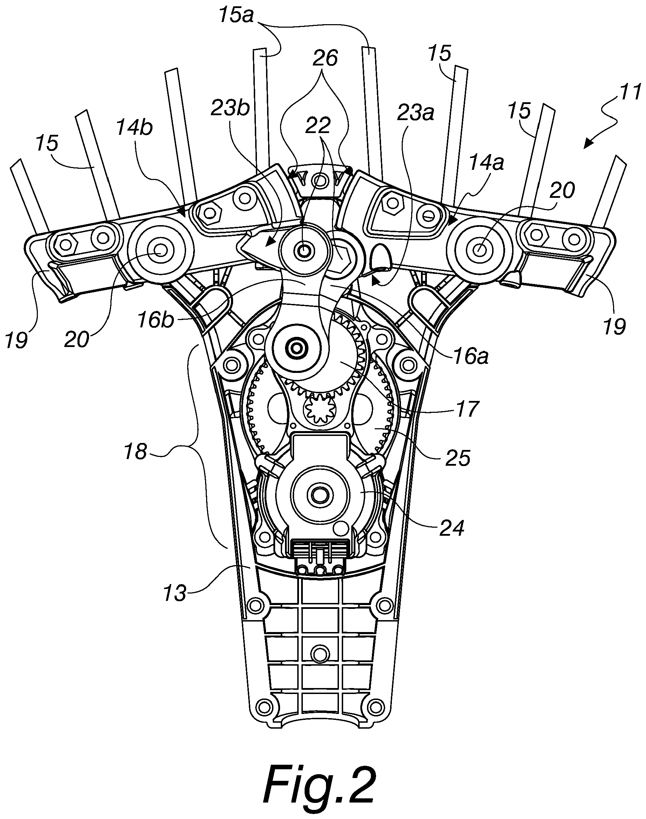

Figure 2 is a sectional view of the detail of Figure 1;

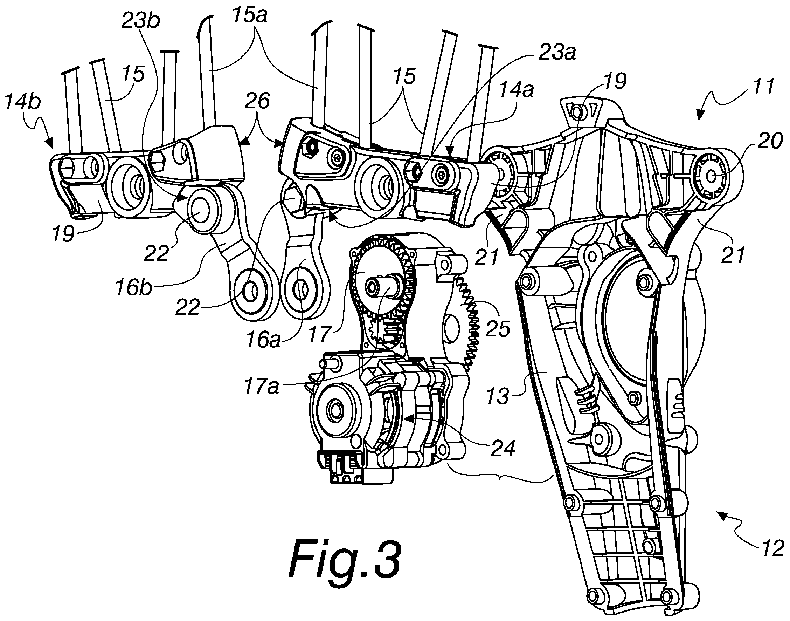

Figure 3 is an exploded view of the cross-section of Figure 2;
Figure 4 is another sectional view of the detail of Figure 1.

With reference to the cited figures, a beating apparatus, particularly for beating olives and the like, according to the invention, is designated generally by the reference numeral 11. It comprises an elongated handle which is for example telescopic, is not visible in the figures, is of a known type and is provided, at a working end 12, with a supporting body 13, to which two oscillating sectors 14a and 14b provided with beating rods 15 are articulated. The two oscillating sectors 14a and 14b are shaped appropriately and have a very similar appearance but are not symmetrical.

Advantageously, the rods 15 are made of carbon fiber, have a tubular structure and mutually diverge so as to define a broad region of action during use.

The mechanism of the apparatus 11 comprises two linkage elements 16a and 16b, which functionally interconnect a crank element 17 to a respective oscillating sector 14a or 14b to impart thereto an oscillating motion during use.

The crank element 17 is functionally connected to motor means 18 in order to be actuated by it during use.

In particular, the crank element 17 is provided with an eccentric pivot 17a to which the linkage elements 16a and 16b are rotatably connected, said linkage elements being in turn respectively connected rotatably to the oscillating sectors 14a and 14b, thus functionally interconnecting them to the crank element 17.

The kinematic structure thus defined, during use of the beating apparatus 11, imposes an oscillation on the first oscillating sector 14a that is offset with respect to the oscillation of the second oscillating sector 14b.

The oscillating sectors 14a and 14b comprise elongated bodies 19 for supporting the rods 15, which are pivoted by means of adapted fulcrums 20 to ends 21 of the supporting body 13, which is fork-shaped.

The elongated bodies 19 are C-shaped, with seats for the accommodation of the rods 15.

Furthermore, the two linkage elements 16a and 16b are functionally and rotatably connected, by virtue of corresponding articulation pivots 22, to the respective elongated bodies 19. In particular, said elongated bodies 19 have first laterally adjacent longitudinal ends 26.

Lower end tabs 23a and 23b extend on the opposite side with respect to the extension side of the rods 15 of said longitudinal ends 26. Said articulation pivots 22 are arranged at said lower end tabs 23a and 23b.

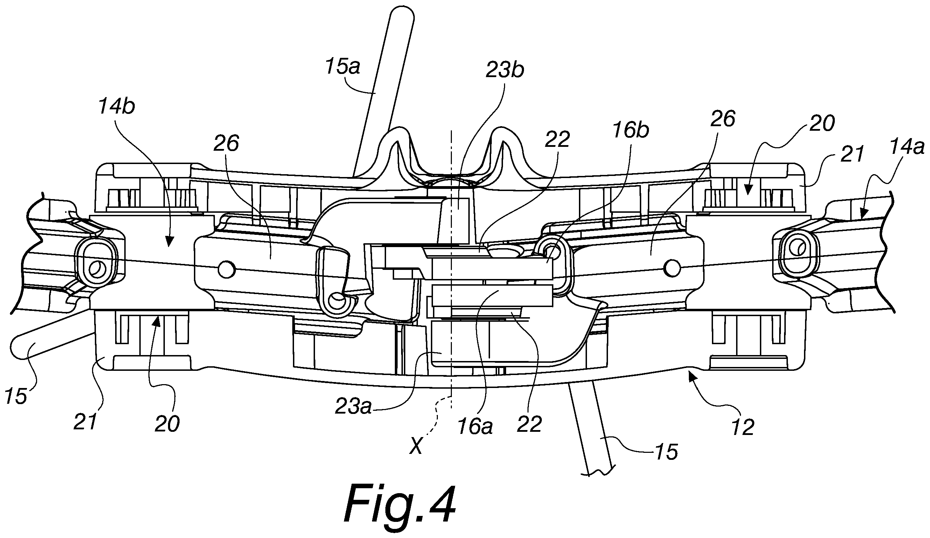

With reference to Figure 4, the lower end tabs 23a and 23b are not symmetrical and are shaped appropriately in order to be arranged mutually opposite, on the side on which they are connected to the respective articulation pivots 22, so as to be able to arrange the linkages 16a and 16b so that they face each other. The overlap of the tab 23a and 23b produces a reduced offset of the oscillating sectors 14a and 14b, with a reduction of vibrations, with respect to known beating apparatuses, while maintaining the decoupling effect at the top and bottom dead centers of the linkages, decreasing the load peaks of the motor.

The oscillating sectors 14a and 14b are arranged side by side. The rods 15 comprise first rods 15a which protrude obliquely from the first longitudinal ends 26 so as to cross at an angle during use, so as to define interfering areas of action.

In this manner, the branches which, during use of the beating apparatus 11, are substantially in a position that is intermediate with respect to the oscillating sectors 14a and 14b are shaken by them by the combined and opposite action of the first rods 15a.

The rods 15 are inclined so as to increase the region of action, with respect to beating machines of the known type, while maintaining the reduced base of the oscillating sectors 14a and 14b.

One of the particularities of the invention is visible in Figure 4, which is a sectional view taken on a plane that is perpendicular to the plane of extension of the rods 15.

The articulation pivots 22 have extension directions which are parallel but are not coplanar. Likewise, the lower end tabs 23a and 23b, on which the two linkages 16a and 16b are pivoted to the respective oscillating sectors, have an almost parallel extension but are not coplanar. Accordingly, the space occupation of the supporting body 13 is reduced with respect to beating machines of the known type.

With reference to the same figure, it can be noticed that the two oscillating sectors 14a and 14b are mutually inclined with respect to the plane of symmetry of the supporting body 13, designated by X. This causes a reduced hindrance of the view of the user on the branch subjected to beating with respect to the beating apparatus of the known type. Furthermore, the inclination of the oscillating sectors 14a and 14b increases the penetration effect on the foliage of the plant.

Advantageously, the motor means 18 comprise an electric motor 24, which is appropriately associated with the supporting body 13, and a speed reduction unit 25, preferably of the gear train type, which functionally interconnects the electric motor 24 to the crank element 17.

Furthermore, the motor means 18 conveniently provide for an electric power supply cable for the electric motor 24, which passes within the handle and can be adapted to its extension.

In particular, the handle, not visible in the figures and per se known, has a telescopic tubular structure which accommodates internally the power supply cable of the motor, adaptable to the extension thereof, powered by a battery.

The electric motor is of the brushless type.

The means for controlling the actuation of the electric motor are of a known type.

The operation of the beating apparatus 11 according to the invention is as follows.

The operator adjusts the extension of the handle, by acting on its telescopic structure.

Then, by acting on a switch button, he activates the electric motor 24, which, by means of the speed reduction unit 25, rotates the crank element 17.

The oscillating sectors 14a and 14b are thus made to oscillate by the respective linkage elements 16a and 16b, which move them to oscillate with different timings.

In this manner, the branches on which the rods 15 of both oscillating sectors act simultaneously do not receive from the first oscillating sector 14a an action that contrasts the action that they simultaneously receive from the second oscillating sector 14b.

This leads to effective shaking of the branches, to the full benefit of efficient beating of the fruits that they carry.

It should be noted that the non-coplanar arrangement of the pivots for the articulation of the linkages to the oscillating sectors and the similar arrangement of the first ends of the oscillating sectors on which the linkages are pivoted causes a reduced space occupation of the supporting body of the oscillating sectors, for an equal extension of the oscillating sectors and/or breadth of the region of action of the rods in use, with respect to that of the apparatus of the known type, generating greater convenience on the user.

It should be noted, furthermore, that the arrangement of the oscillating sectors, which are mutually inclined with respect to the plane of symmetry of the supporting body, ensures a better view on the branch on the part of the user, while maintaining the same breadth of the region of action of the rods in use, with respect to that of the apparatus of the known type.

Finally, it should be noted that the use of an electric motor of the brushless type produces less noise than the apparatus of the known type, producing greater comfort for the user.

In practice it has been found that the invention achieves the intended aim and objects, providing a beating apparatus, particularly for beating olives and the like, that has a working end provided with a compact supporting body.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A beating apparatus (11), particularly for beating olives and the like, comprising a handle provided, at one working end (12), with a supporting body (13) to which two side-by-side oscillating sectors (14a, 14b) provided with rods (15) are articulated, two linkage elements (16a, 16b) being present which interconnect a crank element (17) with a respective oscillating sector (14a, 14b) in order to impart thereto, during use, an oscillating motion, said crank element (17) being functionally connected to motor means (18) in order to be actuated during use, said oscillating sectors (14a, 14b) each comprising an elongated body (19) for supporting said rods (15), which are pivoted by means of corresponding fulcrums (20) of said supporting body (13), said linkage elements (16a, 16b) being functionally connected, by virtue of corresponding pivots (22) for articulation to the respective elongated bodies (19), substantially at first longitudinal ends (26) thereof, **characterized in that** said respective articulation pivots (22) are arranged on end tabs (23a, 23b), and **in that** said end tabs (23a, 23b) are shaped appropriately so as to be mutually opposite, on the side on which they are connected to said respective articulation pivots (22), so as to be able to make said linkages (16a, 16b) face each other.

2. The beating apparatus (11), particularly for beating olives and the like, according to claim 1, **characterized in that** said end tabs (23a, 23b) are extended on the opposite side with respect to the side where the rods (15) of said longitudinal ends (26) are extended.

3. The beating apparatus (11), particularly for beating olives and the like, according to one or more of the preceding claims, **characterized in that** said motor means (18) comprise a brushless electric motor.

4. The beating apparatus (11), particularly for beating olives and the like, according to claim 3, **characterized in that** said brushless electric motor (24) is associated with said supporting body (13).

5. The beating apparatus (11), particularly for beating olives and the like, according to claim 3 or 4, **characterized in that** said motor means (18) comprise a speed reduction unit (25) which functionally interconnects said brushless electric motor (24) with said crank element (17).

6. The beating apparatus (11), particularly for beating olives and the like, according to claim 5, **characterized in that** said speed reduction unit (25) is of the gear train type.

7. The beating apparatus (11), particularly for beating olives and the like, according to one or more of claims 3 to 6, **characterized in that** said handle has a telescopic tubular structure and **in that** said motor means (18) have a cable for the electric power supply of said brushless electric motor (24) which passes within the handle and can be adapted to its extension.

8. The beating apparatus (11), particularly for beating olives and the like, according to claim 3, **characterized in that** said brushless electric motor (24) is battery-powered.

9. The beating apparatus (11), particularly for beating olives and the like, according to one or more of the preceding claims, **characterized in that** said rods (15) comprise first rods (15a) which protrude obliquely from said first longitudinal ends (26) so as to cross at an angle during use, so as to form interfering areas of action.

## Patentansprüche

1. Eine Schlagvorrichtung (11), insbesondere zum Schlagen von Oliven und dergleichen, die einen Griff umfasst, der an einem Arbeitsende (12) mit einem tragenden Körper (13) ausgestattet ist, mit dem zwei nebeneinander liegende mit Stäben (15) ausgestattete oszillierende Sektoren (14a, 14b) gelenkig verbunden sind; wobei zwei Verbindungselemente (16a, 16b) vorhanden sind, die ein Kurbelelement (17) mit einem entsprechenden oszillierenden Sektor (14a, 14b) verbinden, um ihm im Gebrauch eine oszillierende Bewegung zu verleihen; wobei das Kurbelelement (17) funktional mit Motormitteln (18) verbunden ist, um im Gebrauch angetrieben zu werden; wobei die oszillierenden Sektoren (14a, 14b) jeweils einen lang gestreckten Körper (19) zum Tragen der Stäbe (15) umfassen, welche über entsprechende Hebeldrehpunkte (20) des tragenden Körpers (13) drehgelenkig angeschlossen sind; wobei die Verbindungselemente (16a, 16b) funktional über entsprechende Drehzapfen (22) zur gelenkigen Verbindung mit den entsprechenden lang gestreckten Körpern (19) im Wesentlichen an ersten Längsenden (26) derselben angeschlossen sind; **dadurch gekennzeichnet, dass** die jeweiligen Drehzapfen (22) an Endnasen (23a, 23b) angeordnet sind, und dadurch, dass die Endnasen (23a, 23b) entsprechend geformt sind, um einander auf der Seite, an der sie mit den jeweiligen Drehzapfen (22) verbunden sind, gegenüberzuliegen, um zu ermöglichen, dass die Verbindungselemente (16a, 16b) einander zugewandt sind.

2. Die Schlagvorrichtung (11), insbesondere zum Schlagen von Oliven und dergleichen, gemäß Anspruch 1, **dadurch gekennzeichnet, dass** die Endnasen (23a, 23b) sich auf der Seite erstrecken, die der Seite gegenüberliegt, auf der sich die Stäbe (15) der Längsenden (26) erstrecken.

3. Die Schlagvorrichtung (11), insbesondere zum Schlagen von Oliven und dergleichen, gemäß einem oder mehreren der obigen Ansprüche, **dadurch gekennzeichnet, dass** die Motormittel (18) einen bürstenlosen Elektromotor umfassen.

4. Die Schlagvorrichtung (11), insbesondere zum Schlagen von Oliven und dergleichen, gemäß Anspruch 3, **dadurch gekennzeichnet, dass** der bürstenlose Elektromotor (24) mit dem tragenden Körper (13) verbunden ist.

5. Die Schlagvorrichtung (11), insbesondere zum Schlagen von Oliven und dergleichen, gemäß Anspruch 3 oder 4,
**dadurch gekennzeichnet, dass** die Motormittel (18) eine Drehzahlverringerungseinheit (25) umfassen, die den bürstenlosen Elektromotor (24) funktional mit dem Kurbelelement (17) verbindet.

6. Die Schlagvorrichtung (11), insbesondere zum Schlagen von Oliven und dergleichen, gemäß Anspruch 5, **dadurch gekennzeichnet, dass** die Drehzahlverringerungseinheit (25) vom Typ eines Getriebezugs ist.

7. Die Schlagvorrichtung (11), insbesondere zum Schlagen von Oliven und dergleichen, gemäß einem oder mehreren der Ansprüche 3 bis 6, **dadurch gekennzeichnet, dass** der Griff eine teleskopische Röhrenstruktur hat, und dadurch, dass die Motormittel (18) ein Kabel für die Stromversorgung des bürstenlosen Elektromotors (24) haben, das den Griff durchzieht und zu seiner Verlängerung angepasst werden kann.

8. Die Schlagvorrichtung (11), insbesondere zum Schlagen von Oliven und dergleichen, gemäß Anspruch 3, **dadurch gekennzeichnet, dass** der bürstenlose Elektromotor (24) batteriebetrieben ist.

9. Die Schlagvorrichtung (11), insbesondere zum Schlagen von Oliven und dergleichen, gemäß einem oder mehreren der obigen Ansprüche, **dadurch gekennzeichnet, dass** die Stäbe (15) erste Stäbe (15a) umfassen, die schräg aus den ersten Längsenden (26) herausragen, um sich im Gebrauch in einem Winkel zu kreuzen, um überlappende Arbeitsbereiche zu bilden.

## Revendications

1. Appareil de battage (11), en particulier pour battre des olives et analogues, comportant une poignée pourvue, à une extrémité de travail (12), d'un corps de support (13) sur lequel deux secteurs oscillants (14a, 14b), côte à côte, munis de tiges (15) sont articulés, deux éléments de tringlerie (16a, 16b) étant présents qui relient mutuellement un élément de manivelle (17) à un secteur oscillant (14a, 14b) respectif afin d'imprimer à celui-ci, en utilisation, un mouvement oscillant, ledit élément de manivelle (17) étant fonctionnellement relié à des moyens moteurs (18) afin d'être actionné pendant l'utilisation, lesdits secteurs oscillants (14a, 14b) comportant chacun un corps allongé (19) pour supporter lesdites tiges (15), qui pivotent au moyen de points d'appui (20) correspondants dudit corps de support (13), lesdits éléments de tringlerie (16a, 16b) étant fonctionnellement reliés, du fait de pivots (22) correspondants en vue d'une articulation aux corps allongés (19) respectifs, sensiblement à des premières extrémités longitudinales (26) de ceux-ci, **caractérisé en ce que** lesdits pivots d'articulation (22) respectifs sont agencés sur des languettes d'extrémité (23a, 23b), et **en ce que** lesdites languettes d'extrémité (23a, 23b) sont formées de façon appropriée de manière à être mutuellement opposées, sur le côté sur lequel elles sont reliées auxdits pivots d'articulation (22) respectifs, de manière à ce que lesdits éléments de tringlerie (16a, 16b) soient l'un en face de l'autre.

2. Appareil de battage (11), en particulier pour battre des olives et analogues, selon la revendication 1, **caractérisé en ce que** lesdites languettes d'extrémité (23a, 23b) s'étendent sur le côté opposé par rapport au côté où les tiges (15) desdites extrémités longitudinales (26) s'étendent.

3. Appareil de battage (11), en particulier pour battre des olives et analogues, selon une ou plusieurs des revendications précédentes, **caractérisé en ce que** lesdits moyens moteurs (18) comportent un moteur électrique sans balai.

4. Appareil de battage (11), en particulier pour battre des olives et analogues, selon la revendication 3, **caractérisé en ce que** ledit moteur électrique sans balai (24) est associé audit corps de support (13).

5. Appareil de battage (11), en particulier pour battre des olives et analogues, selon la revendication 3 ou 4, **caractérisé en ce que** lesdits moyens moteurs (18) comportent une unité de réduction de vitesse (25) qui relie mutuellement ledit moteur électrique sans balai (24) et ledit élément de manivelle (17) de manière fonctionnelle.

6. Appareil de battage (11), en particulier pour battre des olives et analogues, selon la revendication 5, **caractérisé en ce que** ladite unité de réduction de vitesse (25) est du type à train d'engrenages.

7. Appareil de battage (11), en particulier pour battre des olives et analogues, selon une ou plusieurs des revendications 3 à 6, **caractérisé en ce que** ladite poignée a une structure tubulaire télescopique et **en ce que** lesdits moyens moteurs (18) ont un câble pour l'alimentation électrique dudit moteur électrique sans balai (24) qui passe à l'intérieur de la poignée et peut être adapté à son extension.

8. Appareil de battage (11), en particulier pour battre des olives et analogues, selon la revendication 3, **caractérisé en ce que** ledit moteur électrique sans balai (24) est alimenté par batterie.

9. Appareil de battage (11), en particulier pour battre des olives et analogues, selon une ou plusieurs des revendications précédentes, **caractérisé en ce que** lesdites tiges (15) comportent des premières tiges (15a) qui font saillie obliquement à partir desdites premières extrémités longitudinales (26) de manière à se croiser à un certain angle pendant l'utilisation, de manière à former des zones d'action interférentes.
